# EUROPÄISCHE PATENTSCHRIFT

(11) **EP 1 168 828 B1**
(45) Veröffentlichungstag und Bekanntmachung des Hinweises auf die Patenterteilung: **24.01.2007**
(21) Anmeldenummer: 01115450.7
(22) Anmeldetag: 27.06.2001
(51) Int. Cl.: H04N 5/222

(54) **Verfahren zur Durchführung von Livesendungen mit Zuschauerabstimmung**
Method for carrying out live broadcasts with audience voting
Méthode de réalisation d'émissions en direct avec vote des spectateurs

(30) Priorität: 27.06.2000 DE 10030295; 20.11.2000 DE 10057543
(43) Veröffentlichungstag der Anmeldung: 02.01.2002
(73) Patentinhaber: Bunte Toni, 53819 Neunkirchen-Seelscheid (DE)
(72) Erfinder: Bunte Toni, 53819 Neunkirchen-Seelscheid (DE)
(74) Vertreter: Neumann, Ernst Dieter

(56) Entgegenhaltungen:
- WO-A-00/22907
- WO-A1-99/12349
- US-A- 5 679 077
- US-A- 5 806 005
- J. NOVAK ET AL: "Experiments in New Formats for Connected Communities" April 2000 (2000-04), PUBLIKATIONS DES MARS, FRAUNHOFER - INSTITUT FÜR MEDIENTECHNIK

## Beschreibung

Die Erfindung betrifft eine Vorrichtung und ein Verfahren zur Durchführung von Live-Fernsehsendungen, insbesondere solchen, die unter Leitung eines Moderators stehen und die ein am Aufnahmeort anwesendes Vor-Ort-Publikum einschließen. In derartigen Sendungen, die sowohl rein unterhaltenden als auch rein informativen Charakter haben können oder in der Regel beiden Kriterien unterfallen, ist es bereits heute üblich, während der Live-Sendung Interviews mit nicht am Aufnahmeort befindlichen Personen durchzuführen und diese in die laufende Fernsehübertragung einzuspielen. Hierbei kann es sich um reine Telefoninterviews handeln oder um Interviews, die von einem professionellen Aufnahmeteam mit zuvor ausgesuchten und instruierten Personen durchgeführt werden. Telefoninterviews bieten die Möglichkeit einer spontanen Auswahl der interviewten Personen, sei es nach Auswahl des durchführenden Fernsehsenders, sei es auf eigenen Anruf der zur Meinungsäußerung entschlossenen Personen aus dem Bildschirmpublikum. Telefoninterviews sind dem Medium-Fernsehen deutlich unangemessen. Bildschirminterviews, die von Aufnahmeteams des durchführenden Fernsehsenders veranstaltet werden, sind wenn nicht auf vorherbestimmte Personen, so doch zumindest auf einige vorbereitete Aufnahmeorte begrenzt.

Aus der WO/0022907 ist ein System bekannt, bei dem Verkaufs- oder Auktionsveranstaltungen mit einer elektronischen Kamera aufgenommen und über einen Fernsehsender live übertagen werden. Die Warenangebote werden am Aufnahmeort, d.h. im Studio auf einem Bildschirm angezeigt, der zusammen mit einem Auktionator in der Fernsehsendung übertragen wird. Hierbei werden von einzelnen Zuschauern Geldgebote mit anderen Übertragungsmitteln, insbesondere über Mobiltelefone und entsprechende Funkzellennetze oder mittels Internetterminals über das Internet auf einen Zentralcomputer ("Auction Management System") übertragen. Von diesem Zentralcomputer werden die Geldgebote verwaltet und der vorstehend genannte Bildschirm im Studio gesteuert, der die Warenangebote mit den eingegebenen Geldgeboten in Kombination erkennen läßt.

Aus der US 5,679,077 ist ein computergesteuertes Bingospielsystem bekannt, bei welchem ein Zentralcomputer ("managing computer System") Spielzahlen nach dem Zufallsprinzip auswählt und mit den Zahlen der virtuellen Spielkarten von entfernt befindlichen Spielern vergleicht. Diese können zuvor ihre Spielkartendaten und ihre persönlichen Daten über ein Kommunikationssystem wie interaktives Fernsehen in den Zentralcomputer eingeben und die Spielergebnisse über das Fernsehen verfolgen.

Die US 5,806,005 betrifft ein System für die Bildspeicherung für Digitalkameras, bei welchem Bilddaten über ein Funkzellennetz (cellular network) auf einen Zentralcomputer übertragen und dort weiterverarbeitet werden, um Speicherkapazität in der Digitalkamera freizusetzen.

Aus der WO 99/12349 ist ein System bekannt, bei dem eine Mehrzahl von Benutzern, de über ein "user terminal" verfügen, über ein Datenübertragungsnetzwerk, insbesondere das Internet, auf eine "web site" zugreifen kann, auf der Bildmaterial unterschiedlichen Ursprungs zur Verfügung steht. Die Benutzer können hierbei aktiven Einfluß auf die Bilderauswahl nehmen, insbesondere vor Ort befindliche Kameras, die das Bildmaterial liefern, hinsichtlich des Bildausschnitts steuern.

Die Publikation des MARS, Fraunhofer Institut für Medientechnik; J. Novak et al:
"i2TV: Experiments in New Formats for Connected Communities", Conference abstracts and applications, Karlstad, Schweden, April 2000, Seite 213, offenbart unter dem bezeichnenden Titel "Experiments in New Formats for Connected Communities" am Beispiel einer Internet-Fernsehübertragung eines Bühnenstücks oder dergleichen die Möglichkeit der Einspielung von Live-Kommentaren durch einzelne Fachpersonen über Internetstrukturen.

Hiervon ausgehend liegt der vorliegenden Erfindung die Aufgabe zugrunde, ein System und eine Durchführungsform für Live-Fernsehsendungen bereitzustellen, die die Darstellungsform von Live-Übertragungen mit Publikumskontakt verbessert und die Äußerungsmöglichkeit für die zu Meinungsäußerungen entschlossenen Personen aus dem Bildschirmpublikum erweitert.

Die Lösung hierfür besteht in einer Einrichtung zur Durchführung von Live-Fernsehsendungen - insbesondere solchen, die unter Leitung eines Moderators stehen und die ein Vor-Ort-Publikum einschließen - bei der an einem Aufnahmeort elektronische Aufnahmemittel zur Erzeugung von Bild- und Tonaufnahmen von Live-Ereignissen eingerichtet sind, die mit einem Fernseh-Sender verbunden sind der über Mittel zur Durchführung einer Live-Fernsehsendung für ein Bildschirmpublikum verfügt, wobei die am Aufnahmeort von den Aufnahmemitteln erzeugten Aufnahmen zumindest teilweise den Inhalt der Übertragung einer Live-Fernsehsendung bilden, bei der an weiteren Standorten eine Mehrzahl von digitalen Endgeräten vorgesehen sind, die für digitale Abstimmungen/Meinungsäußerungen/Wettaussagen eingerichtet sind, und die über Internetstrukturen mit einem Rechner/Speicher (Server) im Sender verbunden sind und daß Auswertemittel im Rechner/Speicher im Sender vorgesehen sind, die die Abstimmungs-/Meinungsäußerungs-/Wettprozeduren auswerten und in alphanumerische oder graphische Darstellungen umsetzen, und daß Bildeinspielmittel vorgesehen sind, mit denen die Darstellungen der Ergebnisse der Abstimmungs-/Meinungsäußerungs-/Wettprozeduren in den Ablauf der unter Verwendung der von den Aufnahmemitteln am Aufnahmeort erzeugten Aufnahmen erfolgenden Übertragung der Live-Fernsehsendung einspielbar sind, und daß Mittel zur Identifizierung von an einzelne Personen vergebene PIN-Nummern vorgesehen sind und Mittel zur Löschung der PIN-Nummern nach einer Stimmabgabe der entsprechenden Personen vorgesehen sind.

Die Lösung besteht weiterhin in einem Verfahren zur Durchführung von Live-Fernsehsendungen - insbesondere solchen, die unter Leitung eines Moderators stehen und die ein an einem Aufnahmeort anwesendes Vor-Ort-Publikum einschließen - bei dem an einem eingerichteten Aufnahmeort Bild- und Tonaufnahmen von Live-Ereignissen mit elektronischen Aufnahmemitteln aufgenommen werden, die zu einem Sender übertragen werden und zumindest teilweise den Inhalt der Übertragung der Live-Fernsehsendung bilden, bei dem während des Aufnehmens der Live-Ereignisse am Aufnahmeort an weiteren Standorten digitale Abstimmungs-/Meinungsäußerungs-/Wettaussagedaten mit elektronischen Endgeräten erzeugt werden, die über Internetstrukturen zu dem Sender übertragen und deren Ergebnisse in den Ablauf der Übertragung der Live-Fernsehsendung als Live-Streaming eingespielt werden, und bei dem die abstimmenden Personen durch eine vorher vergebene PIN-Nummer identifiziert sind, die nach der Stimmabgabe gelöscht wird.

Hiermit wird die Möglichkeit geschaffen, die Einbeziehung der Fernsehzuschauer in den Ablauf der Live-Übertragung sowohl hinsichtlich der zur Verfügung stehenden Endgeräte als auch in der Breite der zu übertragenden Äußerungsformen erheblich zu erweitern.

Nach einer günstigen Verfahrensdurchführung kann vorgesehen sein, daß während der Live-Fernsehübertragung der Zählstand der laufenden Abstimmung, Meinungsäußerung oder der Wette mit seinen Änderungen in der laufenden Live-Fernsehsendung im Bild digital mit alphanumerischen Zeichen oder analog in Diagrammen dargestellt wird.

In einer günstigen Ausführung sind die digitalen Endgeräte jeweils multimediafähige und internetfähige Computer, die in die Internetstrukturen integriert sind. Sofern hierbei weiter auf einem Provider innerhalb der Internetstrukturen eine Website des Senders eingerichtet ist, kann diese zur Durchführung von Abstimmungsvorgängen, Meinungsäußerungen, Wettaussagen eingerichtet sein, die auf dieser Weise eine breite Palette von vorgegebenen differenzierten Aussagen oder Entscheidungen bereithalten kann.

Ähnliches gilt, wenn die digitalen Endgeräte sogenannte WAP-Handys sind, mit denen im wesentlichen die gleichen Möglichkeiten wie zuvor beschrieben, gegeben sind. Soweit die digitalen Endgeräte übliche GSM-Handys sind, beschränkt sich dagegen die Äußerungsmöglichkeit auf die Auswahl unter über Telefonnummern kodierten vorgegebenen Aussagen. Die digitalen Endgeräte können mit einem Server eines Providers innerhalb der Internetstrukturen verbunden sein.

Erfindungsgemäß ist bei der Durchführung solcher Abstimmungen vorgesehen, daß die abstimmenden Personen durch eine vorher vergebenen PIN-Nummer identifiziert sind, die nach der Stimmabgabe soweit gelöscht wird, als das Abstimmungsergebnis nicht mehr der PIN-Nummer zuzuordnen ist. Ein derartiges Verfahren kann vorgesehen sein, wenn z. B. eine Abstimmung auf eine bestimmte repräsentative Personengruppe beschränkt werden soll.

Nach einer anderen Verfahrensdurchführung kann vorgesehen sei, daß die abstimmenden, ihre Meinung äußernden oder an einer Wette teilnehmenden Personen insbesondere anhand ihrer Internetadresse identifiziert und registriert werden und ihre Daten nach der Stimmabgabe, Meinungsäußerung oder Wettaussage gespeichert werden. Dies ist insbesondere dann sinnvoll , wenn mit der Teilnahme an den entsprechenden Prozeduren ein Gewinn oder eine Gewinnchance verbunden ist.

In weiterer Ausgestaltung kann auf einem Provider innerhalb der Internetstrukturen eine Website des Senders eingerichtet sein, auf der der Ablauf der Live-Fernsehsendung darstellbar ist. Hiermit kann, gegebenenfalls in Split-Screen-Technik über das gleiche Endgerät sowohl die Live-Fernsehsendung verfolgt werden als auch gegebenenfalls interaktive Kommunikation mit dem Sender aufrechterhalten werden. Hierbei kann insbesondere vorgesehen sein, daß eine Website des Senders eingerichtet ist, die zur Durchführung von Abstimmungsvorgängen/Meinungsäußerungen/Wettaussagen seitens der teilnehmenden Personen eingerichtet ist, deren Einzel- und/oder Gesamtergebnisse unmittelbar in die Übertragung der Live-Fernsehsendung einspielbar sind.

Eine besondere Form der Einbeziehung des Publikums in den Ablauf der Live-Fernsehsendung ist dann möglich, wenn Mittel zur Herstellung von interaktiven Sprechverbindungen zwischen dem Aufnahmeort und den weiteren Standorten über die Internetstrukturen vorgesehen sind. Hieraus ergibt sich die Möglichkeit, Gesprächsverbindungen zwischen dem Moderator und ausgewählten, zu einer Meinungsäußerung bereiten Personen/Bildschirmzuschauern herzustellen.

In Weiterführung dieses Gedankens ist vorgesehen, daß an einer Mehrzahl von vom Aufnahmeort verschiedenen weiteren Standorten weitere elektronische Aufnahmemittel wie Camcorder oder Digitalbildkameras zur Erzeugung von Bild- und/oder Tonaufnahmen aufgestellt sind, die über Internetstrukturen mit einem Server im Sender verbunden sind. Hierdurch ergibt sich die Möglichkeit, sich an der Abstimmung, Meinungsäußerung oder Wette beteiligende Personen aus dem Kreis der Bildschirmzuschauer in den Ablauf der Live-Fernsehsendung einzubeziehen oder besondere Ereignisse, die insbesondere von Personen aus dem Kreis der Bildschirmzuschauer veranstaltet werden und auf deren Ablauf oder Ergebnis die Gesamtheit der Bildschirmzuschauer mittels on-line Kommunikation Wetten abschließen kann, in die Live-Fernsehsendung einzuspielen.

Nach einer anderen Möglichkeit können derartige an weiteren Standorten erzeugte Bildaufnahmen von Publikumsgruppen als Basis für Abstimmungsvorgänge ganzer Personengruppen dienen, indem Bilderkennungssysteme im Rechner/Speicher des Senders vorgesehen sind, die mittels der weiteren elektronischen Aufnahmemittel aufgenommene Bilder von Personengruppen nach Personen identifizieren und nach Personenzahl auswerten können. Hierbei sind weiterhin Mittel vorzusehen, die die Personenzahl als Stimmenzahl einer Abstimmung werten und zählen.

Im Sender können Datenspeichermittel und -wiedergabemittel für Bild- und Tonaufzeichnung vorgesehen sein, die mit entsprechenden Bildauswahl- und -einspielmitteln funktionell verbunden sind, um die gespeicherten Aufzeichnungen in die Live-Fernsehsendung einzuspielen. Mit Ausnahme dieser hier als Aufzeichnungen bezeichneten Bestandteile ist im übrigen, wenn von Aufnahme und Sendung gesprochen wird, immer die Direktübertragung/Live-Streaming gemeint und zu verstehen.

Das System hält somit die Möglichkeit bereit, daß Personen aus dem Bildschirmpublikum Live-Camcorderaufnahmen oder Aktuellzeit-Digitalbildaufnahmen zum Fernsehsender übertragen, die in die Übertragung der Live-Fernsehsendung eingespielt werden. Als Übertragungsweg für derartige Live-Aufnahmen/Standbilder steht das Internet zur Verfügung, wobei die Bilder eines Camcorders bzw. einer Digitalbildkamera auf einen internetfähigen PC/Laptop/Notebook und von diesem aus über das world wide web zum Sender übertragen werden. Hiermit können beliebige Personen aus dem Bildschirmpublikum, den Besitz einer entsprechenden Kamera und eines internetfähigen/multimediafähigen PCs/Laptops/Notebooks vorausgesetzt, in die Live-Fernsehsendungen eingespielt werden, während sie zugleich ihre Statements abgeben oder mit dem Moderator der Live-Fernsehsendung dabei kommunizieren. Das Einwählen bei dem die Live-Fernsehsendung durchführenden Fernsehsender kann durch Bereitstellen einer entsprechenden Website/Homepage durch den Fernsehsender, über welche die Verbindungsherstellung mittels Mausclicks erfolgen kann, erleichtert werden. Ein die Sendung leitender Regisseur kann unter den in den Webserver des Sender bereits eingelinkten Personen ein Casting/eine Auswahl durchführen, so daß nur für die Sendung ausgewählte Personen in die Live-Fernsehsendung eingespielt werden. Alternativ kann auch eine von subjektiven Kriterien unbeeinflußte Auswahl per Zufallsgenerator getroffen werden.

Das von der Person aus dem Bildschirmpublikum zur Verfügung gestellte Kamerabild oder Standbild kann unmittelbar in die Live-Fernesehsendung geschnitten werden, oder auf einen Bildschirm übertragen werden, der mit einem Vor-Ort-Publikum / Studiopublikum zusammen aufgenommen wird und für die Live-Fernsehsendung verwendet wird. Die Einspielung kann Einzelpersonen oder Personengruppen betreffen, wobei bevorzugt eine interaktive Sprechverbindung zwischen der die Aufnahme erzeugenden Person und/oder den in der Aufnahme dargestellten Personen mit dem Moderator der Sendung oder einem Teil des Vor-Ort-Publikums/ Studiopublikums hergestellt wird.

Während im vorstehenden von Personendarstellung und Meinungsäußerung von Personen die Rede ist, ist es nicht ausgeschlossen, daß auf dem angegebenen Übertragungsweg reine Bildbeiträge mit der Darstellung von Naturereignissen, der Darstellung von Verkehrssituationen, der Darstellung von Sportereignissen aus den unterschiedlichsten Blickwinkeln und dergleichen geliefert werden und in der angegebenen Weise in Live-Fernsehsendungen eingebracht werden.

Von unterschiedlichster Form und von unterschiedlichstem Inhalt können auch die Sendungen selber sein, vorrangig sind solche Sendungen von Interesse, in denen das Bildschirmpublikum eine Wahl zwischen oder Auswahl unter verschiedenen Künstlern oder Musiktiteln vornimmt oder eine Voraussage für ein bevorstehendes Ereignis (Wette) als Gesamtheit tätigt. Hierbei kann die entsprechende Aussage des per Internetverbindung mit Bildübermittlung angeschlossenen Teils des Bildschirmpublikums alleine registriert werden oder gemeinsam mit entsprechenden Aussagen/Stimmabgaben eines weiteren Teils des Bildschirmpublikums, das andere Übertragungsmedien wie UMTS-Handy, WAP-Handy, GSM-Handy oder sogar konventionelles Telefon zur Aussage/Stimmabgabe in Anspruch nimmt. In jedem Fall kann das eingehende sich aufaddierende und verändernde Ergebnis vorzugsweise digital oder als Balkendiagramm im Bild der laufenden Live-Fernsehsendung dargestellt werden.

Sofern die Stimmabgabe, Abgabe einer Meinung, Abgabe einer Wettaussage mit einer Gewinnausspielung verbunden ist, ist es erforderlich, die Daten zur Personenidentifizierung zumindest zeitweise beim Fernsehsender in einem mit Webserver ausgestatteten Rechner zu speichern.

Es ist ebenfalls möglich, daß die Live-Fernsehsendung während und/oder nach einer politischen Wahl/Volksbefragung durchgeführt wird, wobei das Bildschirmpublikum eine Schnittmenge mit der Wahlbevölkerung bildet. Hierbei kann eine on-line- Stimmabgabe durch zumindest einen Teil der Wahlbevölkerung, die auch über das Bildschirmpublikum hinausgehen kann, während der Live-Fernsehsendung erfolgen, wobei die abstimmenden Personen durch eine vorher vorgegebenen PIN-Nummer identifiziert sind, die nach der Stimmabgabe gelöscht werden muß, während das reine Abstimmergebnis in einem unter amtlicher Kontrolle stehenden Rechner gespeichert wird. Hierbei muß die Live-Einspielung der Camcorderaufnahme bzw. der Digitalbildaufnahme von der Stimmabgabe inhaltlich entkoppelt werden, so daß nur eine Nachwahlaussage bzw. eine politische Kommentierung zur durchgeführten Wahl/Volksbefragung als Inhalt der Bildeinspielung in Betracht kommt. Ein gleichzeitiges Anzeigen des sich veränderten Wahlergebnisses verbietet sich aus gesetzlichen Gründen bei dieser Form der Live-Fernsehsendung.

Bei allen anderen Formen von Abstimmungen, die das Wahlgeheimnis nicht einzuhalten haben, ist es nach einem besonderen Aspekt der Erfindung möglich, Abstimmungen per Bildeinspielung gruppenweise vornehmen zu lassen, wobei die Auszählung der in einem Bild dargestellten Personen/Köpfe bzw. der in einem Bild für eine Stimmabgabe gehobenen Hände durch automatische Bilderfassungs- und Auswertungssysteme erfolgen kann, die dann entsprechende Zählergebnisse liefern und speichern. Bezüglich weiterer Abwandlungen des Verfahrens wird auf die Patentansprüche verwiesen.

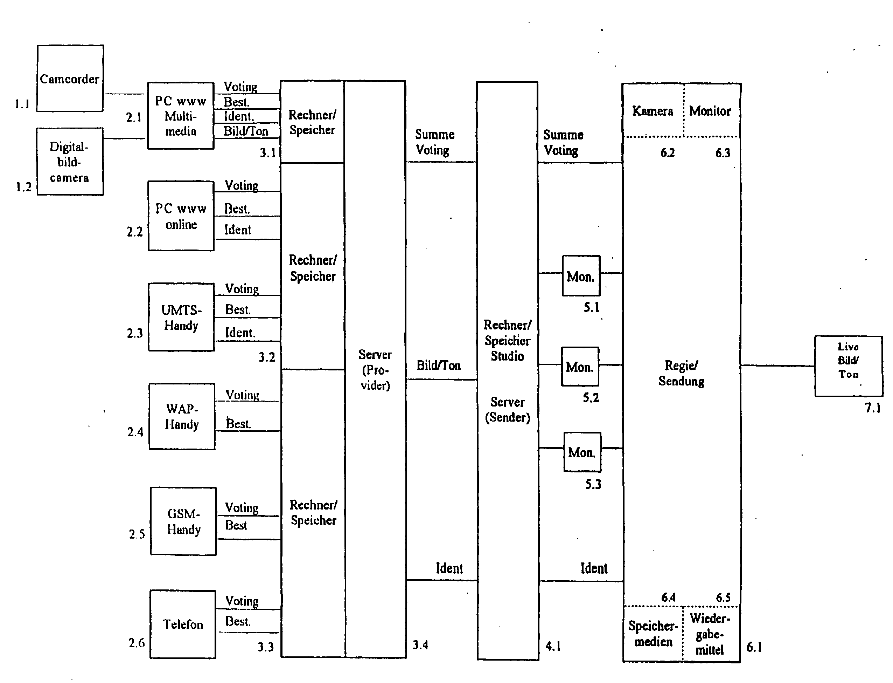

Ein Prinzipbild, in dem die beim erfindungsgemäßen Verfahren eingesetzten Mittel dargestellt sind, ergibt sich aus der Zeichnung. Diese wird spaltenweise von links nach rechts erläutert. Links sind in einem ersten Block die Bildaufnahmemedien Camcorder 1.1 und Digitalbildkamera 1.2 dargestellt. Diese sind wahlweise mit einem Multimedia-PC 2.1 mit Internetanschluß verbunden. Dieser sendet/empfängt über vier symbolische Verbindungen die Informationen Voting (Abstimmung), Bestätigung, Identifizierung und Bild/Ton auf einen ersten Rechner/Speicher 3.1 (Server). Weiterhin sind ein PC 2.2 bzw. ein UMTS-Endgerät 2.3 gezeigt, die über drei Leitungen die folgenden Informationen Voting, Bestätigung, Identifizierung auf einen Rechner/Speicher 3.2 (Server) übertragen/empfangen. Schließlich sind als weitere Endgeräte ein WAP-Handy 2.4, ein GSM-Handy 2.5 und ein Telefon 2.6 dargestellt, die über jeweils zwei Leitungen die Daten Voting und Bestätigung auf einen Rechner/Speicher 3.3 (Server) übertragen/empfangen, wobei die Bestätigung in einer Verbindungsunterbrechung liegen kann. In einer Rechnereinheit 3.4 werden Auswertungen vorgenommen, wobei durch drei Leitungsverbindungen dargestellt Summe Voting, Bild/Tondaten und Identifizierungsdaten auf einen Rechner/Speicher 4.1 (Server) eines Fernsehsenders übertragen werden. An diesen sind zur Durchführung eines Castings/einer Bildauswahl eine Mehrzahl von Monitoren 5.1 bis 5.3 angeschlossen, die dem Casting/der Bildauswahl durch einen Regisseur dienen. Diesem Block von Monitoren nachgeschaltet ist ein Block Regie/Sender 6.1, in dem das Live-Bild 7.1 für die Sendung erzeugt wird. In diesem funktionell und örtlich zu verstehenden Block 6.1 sind Funktionsblöcke für Studiokameras 6.2 und Monitore 6.3 und Bild/Ton-Speichermedien 6.4 und Abspielmittel 6.5 eingezeichnet, die wesentliche Teile der Live-Fernsehsendung produzieren bzw. bereitstellen.

## Patentansprüche

1. Einrichtung zur Durchführung von Live-Fernsehsendungen - insbesondere solchen, die unter Leitung eines Moderators stehen und die ein Vor-Ort-Publikum einschließen - umfassend elektronische Aufnahmemittel zur Erzeugung von Bild- und Tonaufnahmen von Live-Ereignissen, die an einem Aufnahmeort eingerichtet sind und die mit einem Fernseh-Sender verbunden sind, der über Mittel zur Durchführung einer Live-Fernsehsendung für ein Bildschirmpublikum verfügt, wobei die am Aufnahmeort von den Aufnahmemitteln erzeugten Aufnahmen zumindest teilweise den Inhalt der Übertragung einer Live-Fernsehsendung bilden,
**dadurch gekennzeichnet,**
**daß** eine Mehrzahl von digitalen Endgeräten die an weiteren Standorten vorgesehen sind, die für digitale Abstimmungen/Meinungsäußerungen/Wettaussagen eingerichtet sind, und die über Internetstrukturen mit einem Rechner/Speicher im Sender verbunden sind, daß Auswertemittel, die im Rechner/Speicher im Sender vorgesehen sind, die die Abstimmungs-/Meinungsäußerungs-/Wettprozeduren auswerten und in alphanumerische oder graphische Darstellungen umsetzen, daß Bildeinspielmittel vorgesehen sind, mit denen die Darstellungen der Ergebnisse der Abstimmungs-/Meinungsäußerungs-/Wettprozeduren in den Ablauf der unter Verwendung der von den Aufnahmemitteln am Aufnahmeort erzeugten Aufnahmen erfolgenden Übertragung der Live-Fernsehsendung einspielbar sind, und daß Mittel zur Identifizierung von an einzelne Personen vergebene PIN-Nummern vorgesehen sind und Mittel zur Löschung der PIN-Nummern nach einer Stimmabgabe der entsprechender Personen vorgesehen sind, so daß das Abstimmungsergebnis nicht mehr der PIN-Nummer zuzuordnen ist.

2. Einrichtung nach Anspruch 1,
**dadurch gekennzeichnet,**
**daß** die digitalen Endgeräte jeweils aus einem multimediafähigen und internetfähigen Computer bestehen, der in die Internet-Strukturen integriert ist.

3. Einrichtung nach Anspruch 1 oder 2,
**dadurch gekennzeichnet,**
**daß** die digitalen Endgeräte Mobiltelefone umfassen.

4. Einrichtung nach Anspruch 1,
**dadurch gekennzeichnet,**
**daß** die digitalen Endgeräte Festnetztelefone umfassen.

5. Einrichtung nach einem der Ansprüche 1 bis 4,
**dadurch gekennzeichnet,**
**daß** Mittel zur Herstellung von interaktiven Sprechverbindungen zwischen dem Aufnahmeort und den weiteren Standorten über die Internetstrukturen vorgesehen sind.

6. Einrichtung nach einem der Ansprüche 1 bis 5,
**dadurch gekennzeichnet,**
**daß** die digitalen Endgeräte mit einem Rechner/Speicher eines Providers innerhalb der Internetstrukturen verbunden sind.

7. Einrichtung nach einem der Ansprüche 1 bis 6,
**dadurch gekennzeichnet,**
**daß** im Sender Datenspeichermittel und Wiedergabemittel für Bild- und Tonaufzeichnungen vorgesehen sind, die mit den Bildauswahl- und -einspielmitteln verbunden sind.

8. Einrichtung nach einem der Ansprüche 1 bis 7,
**dadurch gekennzeichnet,**
**daß** auf einem Provider innerhalb der Internetstrukturen eine Website des Senders eingerichtet ist, auf der der Ablauf der Live-Fernsehsendung darstellbar ist.

9. Einrichtung nach einem der Ansprüche 1 bis 8,
**dadurch gekennzeichnet,**
**daß** auf einem Provider innerhalb der Internetstrukturen eine Website des Senders eingerichtet ist, die zur Durchführung von Abstimmungsvorgängen/Meinungsäußerungen/Wettaussagen eingerichtet ist, die unmittelbar in die Übertragung der Live-Fernsehsendung einspielbar sind.

10. Einrichtung nach einem der Ansprüche 1 bis 9,
**dadurch gekennzeichnet,**
**daß** an weiteren Standorten weitere elektronische Aufnahmemittel zur Erzeugung von Bild- und Tonaufnahmen aufgestellt sind, die über Internetstrukturen mit einem Rechner/Speicher im Sender verbunden sind.

11. Einrichtung nach Anspruch 10,
**dadurch gekennzeichnet,**
**daß** an einen Rechner/Speicher (Server) des Senders eine Mehrzahl von Monitoren angeschlossen ist.

12. Einrichtung nach Anspruch 10 oder 11,
**dadurch gekennzeichnet,**
**daß** Bilderkennungssysteme im Rechner/Speicher des Senders vorgesehen sind, die mittels der weiteren elektronischen Aufnahmemitteln aufgenommene Bilder von Personengruppen nach Personen identifizieren und nach Personenzahl auswerten können.

13. Einrichtung nach Anspruch 12,
**dadurch gekennzeichnet,**
**daß** Mittel vorgesehen sind, die die Personenzahl als Stimmenzahl einer Abstimmung werten und zählen.

14. Verfahren zur Durchführung von Live-Fernsehsendungeninsbesondere solchen, die unter Leitung eines Moderators stehen und die ein an einem Aufnahmeort anwesendes Vor-Ort-Publikum einschließen - bei dem an einem eingerichteten Aufnahmeort Bild- und Tonaufnahmen von Live-Ereignissen mit elektronischen Aufnahmemitteln aufgenommen werden, die zu einem Fernseh-Sender der über Mittel zur Durchführung einer Live-Fernsehsendung für ein Bildschirmpublikum verfügt übertragen werden und zumindest teilweise den Inhalt der Übertragung der Live-Fernsehsendung bilden,
**dadurch gekennzeichnet,**
**daß** während des Aufnehmens der Live-Ereignisse am Aufnahmeort an weiteren Standorten digitale Abstimmungs-/Meinungsäußerungs-/Wettaussagedaten mit elektronischen Endgeräten erzeugt werden, die über Internetstrukturen zu dem Sender übertragen und deren Ergebnisse in den Ablauf der Übertragung der Live-Fernsehsendung eingespielt werden, und
**daß** die abstimmenden Personen durch eine vorher vergebene PIN-Nummer identifiziert sind, die nach der Stimmabgabe gelöscht wird, so daß das Abstimmungsergebnis nicht mehr der PIN-Nummer zuzuordnen ist.

15. Verfahren nach Ansprüch 14,
**dadurch gekennzeichnet,**
**daß** die abstimmenden/ihre Meinung äußernden/wettenden Personen insbesondere anhand ihrer Internet-Adresse identifiziert werden und ihre Daten nach der Stimmabgabe /Meinungsäußerung/Wettaussage gespeichert werden.

16. Verfahren nach einem der Ansprüche 14 oder 15,
**dadurch gekennzeichnet,**
**daß** während der Live-Fernsehübertragung der Zählstand der laufenden Abstimmung/Meinungsäußerung/Wette mit seinen Änderungen in der laufenden Live-Fernsehsendung im Bild digital oder analog dargestellt wird.

17. Verfahren nach einem der Ansprüche 14 bis 16,
**dadurch gekennzeichnet,**
**daß** zwischen dem Aufnahmeort und den weiteren Standorten interaktive Sprechverbindungen über die Internetstrukturen hergestellt werden.

18. Verfahren nach einem der Ansprüche 14 bis 17,
**dadurch gekennzeichnet,**
**daß** während der Übertragung der Live-Fernsehsendung zeitweise Bild- und Tonaufzeichnungen von Datenspeichermittel im Sender in die Fernsehsendung eingespielt werden.

19. Verfahren nach einem der Ansprüche 14 bis 18,
**dadurch gekennzeichnet,**
**daß** die Live-Fernsehsendung auch oder ausschließlich über Internetstrukturen auf einer Website des Senders dargestellt wird.

20. Verfahren nach einem der Ansprüche 14 bis 19,
**dadurch gekennzeichnet,**
**daß** während der Übertragung der Live-Fernsehsendung an weiteren Standorten digitale Aufnahmen von weiteren Live-Ereignissen mit weiteren elektronischen Aufnahmemitteln erzeugt werden, die über Internetstrukturen zu dem Sender übertragen und in den Ablauf der Übertragung der Live-Fernsehübertragung eingespielt werden.

21. Verfahren nach Anspruch 20,
**dadurch gekennzeichnet,**
**daß** Einzelpersonen und/oder Personengruppen von Abstimmenden, Meinungsäußernden oder Wettenden während der Live-Fernsehsendung mit den weiteren Aufnahmemitteln aufgenommen, übertragen und in die Live-Fernsehsendung eingespielt werden.

22. Verfahren nach Anspruch 21,
**dadurch gekennzeichnet,**
**daß** Bilderkennungssysteme im Rechner/Speicher des Senders vorgesehen sind, die mittels der weiteren elektronischen Aufnahmemittel aufgenommene Bilder von Personengruppen nach Personen identifizieren und nach Personenzahl auswerten können.

23. Verfahren nach Anspruch 22,
**dadurch gekennzeichnet,**
**daß** Mittel vorgesehen sind, die die Personenzahl als Stimmenzahl einer Abstimmung werten und zählen.

## Claims

1. A system for executing live television programmes, more particularly those which are under the direction of a presenter and which include an on-location audience, comprising electronic receiving means for producing image and sound recordings of live events which are provided in a recording location and which are connected to a television station which comprises means for executing a live television programme for a screen audience, wherein the recordings made at the recording location at least partially constitute the contents if the transmission of a live television programme,
**characterised in**
**that** a plurality of digital end appliances are provided on further sites, which digital end appliances are suitable for recording the results of digital voting/ expressions of opinions/ betting procedures and which, via internet structures, are connected to a computer/memory in the transmitter,
**that** there are provided evaluation means in the computer/memory in the transmitter, which evaluation means evaluate the voting results, expressed opinions/ betting results and convert same into alpha-numerical or graphic presentations, that there are provided picture mixing means with the help of which the results of the voting/opinion into the sequence of the transmission of the live television programme, using the recordings produced by the recording means on location and that there are provided means for identifying PIN numbers given to individual persons as well as means for deleting the PIN numbers after the respective persons have given their votes, so that the voting results can no longer be associated with the PIN number.

2. A system according to claim 1,
**characterised in**
**that** the digital end appliances each consist of a multi-media-capable or internet-capable computer which is integrated into the internet structures.

3. A system according to claim 1 or 2,
**characterised in**
**that** the digital end appliances comprise mobile telephones.

4. A system according to claim 1,
**characterised in**
**that** the digital end appliances comprise fixed network telephones.

5. A system according to any one of claims 1 to 4,
**characterised in**
**that** there are provided means for inter-active speaking connections between the recording location and the further sites via internet structures.

6. A device according to any one of claims 1 to 5,
**characterised in**
**that** the digital end appliances are connected to a computer/memory of a provider within the internet structures.

7. A system according to any one of claims 1 to 6,
**characterised in**
**that** in the transmitter, there are provided data storage means and reproduction means for picture and sound recordings which are connected to picture selection and mixing means.

8. A system according to any one of claims 1 to 7,
**characterised in**
**that** a website of the transmitter is installed on a provider within the internet structures, on which website the sequence of the live television programmes can be shown.

9. A system according to any one of claims 1 to 8,
**characterised in**
**that** a website of the transmitter is installed on a provider within the internet structures, which website is designed to carry out voting procedures/opinion expressing procedures/betting procedures which can be directly mixed with the transmission of the live television programme.

10. A system according to any one of claims 1 to 9,
**characterised in**
**that** further locations are provided with further electronic recording means for producing picture and sound recordings which, via internet structures, are connected to a computer/memory in the transmitter.

11. A system according to claim 10,
**characterised in**
**that** a plurality of monitors is connected to a computer/memory of the transmitter.

12. A system according to claim 10 or 11,
**characterised in**
**that** in the computer/memory, there are provided picture recognition systems which are able to identify pictures of groups of persons taken by the further electronic recording means, and evaluate same according to the number of persons.

13. A system according to claim 12,
**characterised in**
**that** there are provided means which evaluate and count the number of persons as votes of a voting procedure.

14. A method of executing live television programmes, more particularly those which are under the direction of a presenter and which include an on-location audience, wherein, on a prepared recording site, picture and sound recordings of live events are produced by electronic recording means, which recordings are transmitted to a television transmitter which is provided with means for carrying out a live television programme for a screen audience and which recordings constitute at least partially the contents of the transmission of the live television programme,
**characterised in**
**that** during the recording of the live events on the recording location, further sites are used to generate data of digital voting/opinion expressing/betting procedures by means of electronic end appliances, which data are transmitted via internet structures to the transmitter and the results of which data are incorporated into the transmission sequence of the live television programme, and
**that** the voting persons are identified by a previously allocated PIN number which is deleted after completion of the voting procedure, so that the voting result can no longer be associated with the PIN number.

15. A method according to claim 14,
**characterised in**
**that** the voting/opinion expressing/betting persons are identified more particularly by their internet address and that their data are stored after the completion of the voting/opinion expressing/betting procedure.

16. A method according to claim 14 or 15,
**characterised in**
during the live television transmission, the number of votes counted during the voting/opinion expressing/betting procedure and the changes in same are represented during the on-going live television programme in the picture either in a digital or analogue way.

17. A method according to any one of claims 14 to 16,
**characterised in**
**that** interactive speaking connections can be provided between the recording location and the further sites.

18. A method according to any one of claims 14 to 17,
**characterised in**
**that** during the transmission of the live television programme, picture or sound recordings of data storage means in the transmitter are temporarily mixed with the television programme.

19. A method according to any one of claims 14 to 18,
**characterised in**
**that** the live television programme is also or exclusively shown via internet structures on a website of the transmitter.

20. A method according to any one of claims 14 to 19,
**characterised in**
**that** during the transmission of the live television programme, digital recordings of further live events are made by further electronic recording means on further sites, which digital recordings are transmitted via internet structures to the transmitter and are mixed with the transmission of the live television programme.

21. A method according to claim 20,
**characterised in**
**that** individual persons and/or groups of people voting, expressing their opinion or betting can be filmed during the live television programme by further recording means, transmitted and mixed with the live television programme.

22. A method according to claim 21,
**characterised in**
**that** in the computer/memory of the transmitter, there are provided picture identification systems which identify the people and evaluate according to the number of people any pictures of groups of people filmed by the further electronic recording means.

23. A method according to claim 22,
**characterised in**
there are provided means which evaluate and count the number of people as votes of a voting procedure.

## Revendications

1. Dispositif pour la réalisation d'émissions télévisuelles en direct, en particulier celles qui sont animées par un présentateur et qui comprennent du public sur place, comprenant des moyens électroniques d'enregistrement pour la production d'enregistrement d'images et de sons des évènements en direct, qui possède des moyens de réalisation d'une émission télévisuelle en direct par l'intermédiaire de téléspectateurs, lesquels sont installés et connectés sur un lieu d'enregistrement à un émetteur de télévision, les enregistrements produits par les moyens d'enregistrement sur le lieu d'enregistrement constituant au moins en partie le contenu de la transmission d'une émission télévisuelle en direct,
**caractérisé en ce que**,
plusieurs terminaux numériques sont prévus, lesquels sont installés dans d'autres lieux pour des votes/suffrages/déclarations concernant des paris numériques, et qui sont connectés avec un ordinateur/un système de sauvegarde dans l'émetteur par l'intermédiaire de structures Internet, des moyens d'évaluation qui sont prévus dans l'ordinateur/la mémoire dans l'émetteur, lesquels évaluent les procédures de vote/de suffrage/de pari et les convertissent en représentations alphanumériques ou graphiques, des moyens d'incrustation d'image avec lesquels les représentations des événements des procédures de vote/de suffrage/de pari peuvent être incrustées pendant le déroulement de la transmission de l'émission télévisuelle en direct en utilisant les enregistrements produits sur le lieu d'enregistrement par les moyens d'enregistrement, de telle sorte que le résultat de la syntonisation n'est plus à attribuer au numéro PIN.

2. Dispositif selon la revendication 1,
**caractérisé en ce que**
les terminaux numériques sont respectivement composés d'un ordinateur compatible multimédia et compatible Internet, lequel est intégré dans les structures Internet.

3. Dispositif selon la revendication 1 ou 2,
**caractérisé en ce que**
les terminaux numériques comprennent des téléphones mobiles.

4. Dispositif selon la revendication 1,
**caractérisé en ce que**
les terminaux numériques comprennent des téléphones fixes.

5. Dispositif selon l'une des revendications 1 à 4,
**caractérisé en ce que**
des moyens de production de communications vocales interactives sont prévus entre le lieu d'enregistrement et les autres lieux par l'intermédiaire des structures Internet.

6. Dispositif selon l'une des revendications 1 à 5,
**caractérisé en ce que**
les terminaux numériques sont connectés avec un ordinateur/un système de sauvegarde d'un fournisseur d'accès au sein des structures Internet.

7. Dispositif selon l'une des revendications 1 à 6,
**caractérisé en ce que**
des moyens de sauvegarde des données et de restitution pour les enregistrements d'images et de sons sont prévus, lesquels sont connectés avec des moyens de sélection et d'incrustation d'image.

8. Dispositif selon l'une des revendications 1 à 7,
**caractérisé en ce qu'**un
site Internet de l'émetteur est installé chez un fournisseur d'accès au sein des structures Internet, sur lequel il est possible de représenter l'émission télévisuelle en direct.

9. Dispositif selon l'une des revendications 1 à 8,
**caractérisé en ce qu'**un
site Internet de l'émetteur est installé chez un fournisseur d'accès au sein des structures Internet, lequel est conçu pour réaliser des votes/suffrages/déclarations concernant des paris, lesquels peuvent être incrustés immédiatement dans l'émission télévisuelle en direct.

10. Dispositif selon l'une des revendications 1 à 9,
**caractérisé en ce qu'**en
d'autres lieux des moyens électroniques d'enregistrement sont installés pour la production d'enregistrement d'images et de sons, lesquels sont connectés par l'intermédiaire des structures Internet avec un ordinateur/un système de sauvegarde dans l'émetteur.

11. Dispositif selon la revendication 10,
**caractérisé en ce que**
plusieurs moniteurs sont raccordés à un ordinateur/un système de sauvegarde de l'émetteur.

12. Dispositif selon la revendication 10 ou 11,
**caractérisé en ce que**
des systèmes de reconnaissance d'image sont prévus dans l'ordinateur/la mémoire de l'émetteur, lesquels, à l'aide des moyens d'enregistrement électroniques supplémentaires sont en mesure d'identifier par individus, à partir des images enregistrées de groupes d'individus et d'en évaluer le nombre d'individus.

13. Dispositif selon la revendication 12,
**caractérisé en ce que**
des moyens sont prévus, lesquels évaluent et comptent le nombre d'individus en tant que nombre de voix d'un vote.

14. Procédé permettant la réalisation d'émissions télévisuelles en direct, en particulier celles qui sont animées par un présentateur et qui comprennent du public sur place sur un lieu d'enregistrement, pour lequel des images et des sons d'évènements en direct sont enregistrés avec des moyens électroniques d'enregistrement sur un lieu d'enregistrement installé, lesquels sont transmis vers un émetteur de télévision qui possède des moyens permettant de réaliser une émission télévisuelle en direct pour les téléspectateurs et qui constituent au moins en partie le contenu de la transmission de l'émission télévisuelle en direct,
**caractérisé en ce que**,
pendant l'enregistrement, des évènements en direct sur le lieu d'enregistrement, dans d'autres lieux, des données numériques de vote/de suffrage/de déclaration concernant des paris sont produites avec des terminaux électroniques, lesquelles sont transmises vers l'émetteur par l'intermédiaire de structures Internet et dont les résultats sont incrustés au cours de la transmission de l'émission télévisuelle en direct, et que les individus qui votent sont identifiés via un numéro PIN attribué préalablement, lequel est supprimé à l'issue du vote, de telle sorte que le résultat du vote ne soit plus attribué au numéro PIN.

15. Procédé selon la revendication 14,
**caractérisé en ce que**
les individus votant/exprimant leur suffrage/pariant sont identifiés en particulier par l'intermédiaire de leur adresse Internet et les données les concernant sont sauvegardées en fonction du vote/de suffrage/du pari.

16. Procédé selon l'une des revendications 14 ou 15,
**caractérisé en ce que**
pendant la transmission télévisuelle en direct le décompte des vote/suffrage/pari en cours avec ses modifications est représenté de façon numérique ou analogique sur l'image de la transmission télévisuelle en direct.

17. Procédé selon l'une des revendications 14 à 16,
**caractérisé en ce que**
des communications vocales interactives sont établies entre le lieu d'enregistrement et les autres lieux par l'intermédiaire des structures Internet.

18. Procédé selon l'une des revendications 14 à 17,
**caractérisé en ce que**,
pendant la transmission de l'émission télévisuelle en direct, momentanément, des enregistrements d'images et de sons de moyens de sauvegarde des données dans l'émetteur sont incrustés dans l'émission télévisuelle.

19. Procédé selon l'une des revendications 14 à 18,
**caractérisé en ce que**
l'émission télévisuelle en direct est également ou exclusivement représentée par l'intermédiaire des structures Internet sur un site Web de l'émetteur.

20. Procédé selon l'une des revendications 14 à 19,
**caractérisé en ce que**,
pendant la transmission de l'émission télévisuelle en direct vers d'autres lieux, des enregistrements numériques d'autres évènements en direct peuvent être réalisés avec d'autres moyens électroniques d'enregistrement, lesquels sont transmis à l'émetteur par l'intermédiaire des structures Internet et incrustés au cours de la transmission de l'émission télévisuelle en direct.

21. Procédé selon la revendication 20,
**caractérisé en ce que**,
des individus et/ou des groupes d'individus votant, exprimant leur suffrage ou pariant sont enregistrés pendant l'émission télévisuelle en direct à l'aide des moyens d'enregistrement électroniques supplémentaires, transmis et incrustés dans l'émission télévisuelle en direct.

22. Procédé selon la revendication 21,
**caractérisé en ce que**,
des systèmes de reconnaissance d'image sont prévus dans l'ordinateur/la mémoire de l'émetteur, lesquels, à l'aide des moyens d'enregistrement électroniques supplémentaires sont en mesure d'identifier par individus à partir des images enregistrées de groupes d'individus et d'en évaluer le nombre d'individus.

23. Procédé selon la revendication 22,
**caractérisé en ce que**,
des moyens sont prévus, lesquels évaluent et comptent le nombre d'individus en tant que nombre de voix.
